# EUROPEAN PATENT APPLICATION

(11) **EP 1 531 439 A1**
(43) Date of publication of application: **18.05.2005**
(21) Application number: 04026514.2
(22) Date of filing: 09.11.2004
(51) Int. Cl.: G08B 25/01, G08B 21/02

(54) **Method of localisation**

(30) Priority: 14.11.2003 CH 7362003
(71) Applicant: Lumsden, Jason, 1003 Lausanne (CH)
(72) Inventor: Lumsden, Jason, 1003 Lausanne (CH)
(74) Representative: Besse, François

(57) **Abstract**

Methods and apparatus are disclosed for the tracking and location of a mobile transmitter embedded, enclosed or attached to different items using either the existing, or, in some circumstances, a specifically installed cellular network base station infrastructure with a location program installed on the base stations. Also using a mobile telephone with text messaging reception ability, messaging service, SIM technology and flexible or rigid circuitry. The goal of this being to locate lost children, pets or anything furnished with the necessary circuitry, and provide emergency location information in the event of a motor accident or personal emergencies.

## Description

### Field of the invention

This invention relates to a method of locating people in general or children specifically, animals and or possessions.

### Background of the invention

Until now if a child goes missing the parents contact the police and a search ensues, sometimes successful sometimes not. If the child is old enough and has a cell phone the police may be able to locate them using their phone signal. When a child goes missing in a theme or attraction park, the parents look, inform staff and wait and hope.

If a pet goes missing the owner goes out looking haphazardly and, if he had the foresight to have the animal furnished with a chip or tattoo, waits for someone to find it and either look at tattoo or scan it to find owner information.

When people travel they take maps with them and have to buy a new map, sometimes several, each time they visit a new place, but even with a map the street markings are not always easy to find and people often become lost. Or now certain mobile phones offer a location service.

When there is an accident someone must first call the emergency services and sometimes, precious time is lost before someone comes across the accident scene.

Some patients cannot receive constant care but are at high risk of accident, injury or occurrence of a medical problem. If they become unable to get help they must also wait for someone to find them. There are many deaths each year where the person dies in their apartment or house because they are unable to get to a telephone.

When people are attacked or are physically aggressed in some way if they have a personal alarm it may scare off the aggressor, but is often only effective if someone is in earshot of the alarm and is willing to help, and the victim must still contact the police after the event.

The cellular network communications systems used by cellular telephone and personal messaging services are characterised by overlapping cells, with each cell having an antenna/transmitter or base station. A typical mobile phone user passes through different cells with constant, or semi constant, contact with the base stations being passed from station to station. This way the network knows which cell and base station to use to make contact and keeps loose track of the user.

Subscriber Identification Module or SIM technology is a way for people to buy time or service from a telecommunications service provider, (TSP). The SIM chip holds information about the subscriber and identification.

Normally the precise location of the transmitter with SIM is not necessary, enough for the system to know which cell to contact. In certain emergency situations, such as those described above for example, the location of the transmitter and therefore the device would be of enormous help in locating the carrier of the transmitter. Until now this transmitter has only been included in other electronic communications devices.

### Objects of the invention

By the introduction of circuitry required to operate a transmitter, a controller, SIM chip and antenna into various items such as broaches/pins, clothes, (in the form of label-like design), or animal collars/bandanas, personal alarms and vehicles. It is the first object of this invention to render said items, by means of the method and devices described in claims, locatable in the event of loss or emergency.

It is a second object of this invention to provide emergency location in the event of an accident, with an emergency transmission being triggered by the event and sent to respective emergency services. The triggering of an airbag in a car for example.

It is another object of this invention to provide emergency location in the event a child, carrier of one form of the invention, goes missing or is lost.

It is another object of this invention to locate a person or child in a theme or attraction park or other predefined area by use of existing or specifically installed cellular base station network.

It is a further object of this invention to provide location information in the event a pet, wearing the invention in some form, is lost to its owners.

It is a further object of this invention to provide emergency location triggered by the carrier of the device. For the elderly or patients at high risk, or people being aggressed.

It is another object of this invention to give location information indicated on an electronic map to people who need to find their location in a new city or place.

### Summary of the invention

The above cited objects are achieved with a method and a device as defined in the claims.

In accordance with a further object there is disclosed a process and device to locate a person in an unfamiliar area or city/town and provide a location on an electronic map.

In accordance to another object of the invention there is disclosed a process and devices to provide emergency location of people in distress, victims or accident scenes.

### Brief description of the drawings

The summary above and the detailed description and claims below may be more easily understood if read in conjunction with the accompanying illustrations.
FIG 1 is a representation of the cells of the cellular communications network.
FIG 2 is a diagram of a standard mobile telephone circuit.
FIG 3 is a flow chart of the method of claim 1.
FIG 4 is a diagram of the circuit required in items.
FIG 5 is a diagram showing one assembly of the animal collar.

### Detailed description of the invention

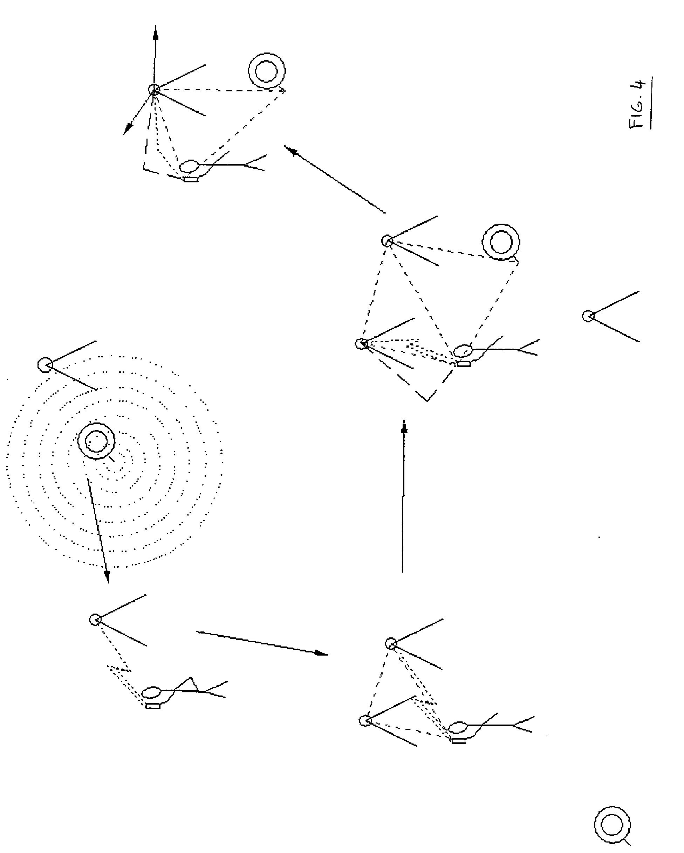

The circuitry shown in figure 4 is the circuitry to be incorporated into different items which can be worn or carried by children, adults, animals or placed on/in mobile objects. The aforementioned carriers shall hereafter be known as porters. The person operating the device, i.e. the person looking, shall hereafter be known as the user.

A method is disclosed for tracking and locating people, animals or things furnished with the specified circuitry. Comprising the steps of, a) the device emits a constant or intermittent signal with identification information for cell network tracking, b) the user calls the device tracking/phone number which activates a program installed on the base stations, c) the program contacts other surrounding antennae and triangulates the position of the user, d) then with the user as one point of reference triangulates the position of the device and e) calculates its position relative to the user, f) the program then sends a text message to the phone/user, giving direction and distance of device from user. The process is repeated from c until the call is terminated.

Whereby the information sent to the user contains at least one direction, N, S, E, W, and the distance in metres or kilometres.

In the case that the device is in constant independent operation and not activated by the porter, it is in constant or semi constant contact with the cellular network. The device does not need to receive or process any information and only acts as a beacon for the cellular network. This would be the case when the porter is a child or animal for example.

The TSP using this method and devices must determine the frequencies to be used and the range of call or identification numbers that are to be assigned to the SIM chip in each device and for each application the different devices are used for.

The varied applications of this invention have a direct effect on the final design of each device. For example when the device is worn as a broach the design of the broach will affect the shape and configuration of the circuitry. So even though the size and shape of both item and circuitry may change the function and method or process of the device as whole remain constant.

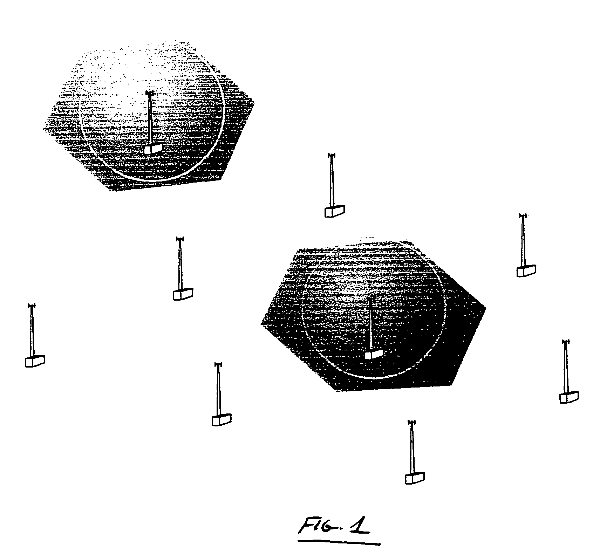

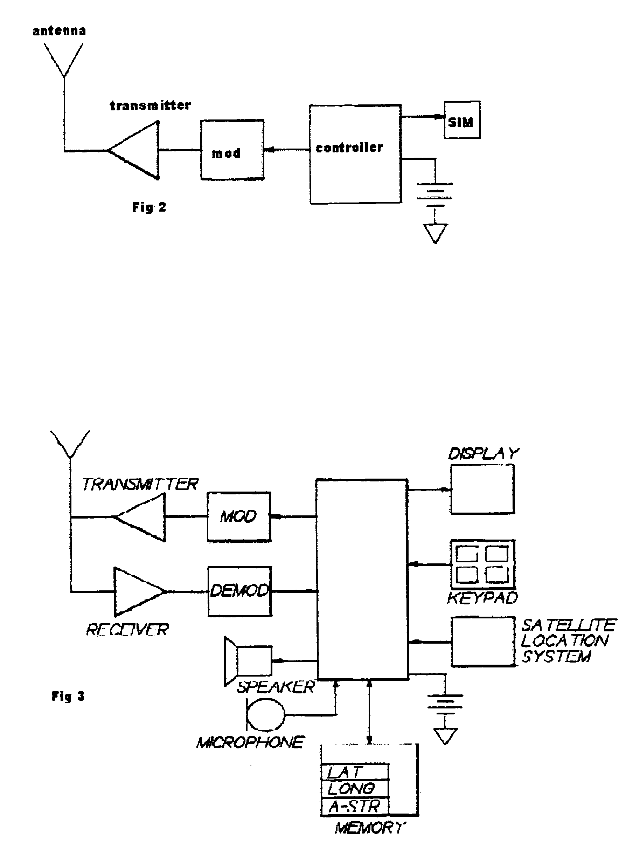

As stated in the background the existing cellular network is made up of many base stations at the centre of many overlapping cells, (FIG 1). By taking the circuitry that is responsible for keeping in touch with the cellular network from a standard mobile telephone, (FIG 2), the antenna, modulator, controller and transmitter, and combining it with SIM technology, flexible circuitry, giving it its own power supply and introducing it into various items a new, easy and effective tracking device is created, (FIG 4), and with the introduction of a specialised program in the base stations of the cellular network, designed to use the signal and other base stations to position the device, the method of tracking the devices is in place.

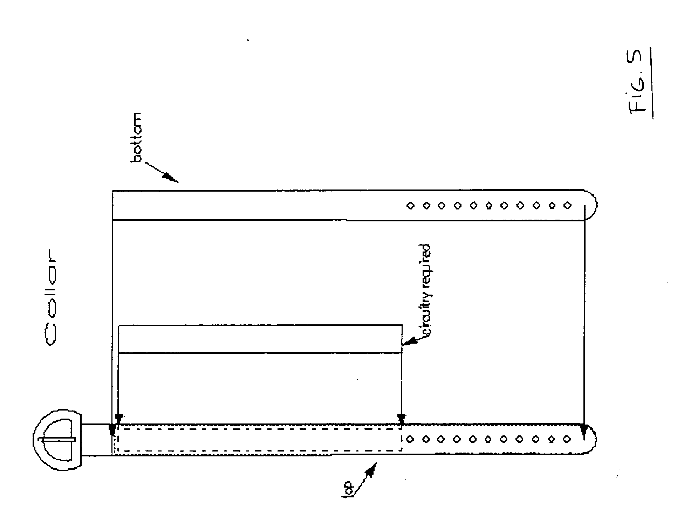

When being used for the location of animals the circuitry and necessary components are on flexible circuitry, which is to be sandwiched between layers of leather or whatever material is used to make animal collars, FIG5, or sewn onto the animal bandanas. Each collar will have a unique calling number to be used with the method explained in claim 1, and shown in FIG 3, by the user in the event of loss.

When being used by the elderly or infirm, the circuitry could be either rigid or flexible. It would be housed in a slim, preferably water resistant, case with a button. This could be worn or carried by the porter and when in distress they push the button. The SIM could be programmed with information such as allergies, blood type, medication, known problems etc, and this information is sent to the emergency services with the location of the porter when activated. This would be similar to the personal alarm device in case of aggression but with a direct contact to different emergency services.

If incorporated into the airbag system of automobiles the device would be connected to the airbag controller. When the airbag controller generates an activation signal for the airbag it simultaneously activates the circuitry. In this case the SIM could be programmed with information such as registration, name, blood type etc. The activation of the circuitry emits a signal with the information to the base stations and the base stations find the location of the accident and instantly sent porter information and location to the emergency services such as police and ambulance.

When used for the location of people the circuitry would be incorporated into badges, pins, broaches, hats, or sewn into clothes or bags etc. Each device has a unique calling number to be used with the method described in claim 1.

Although the invention is destined to be used with the existing cellular network sometimes the existing network does not provide sufficient coverage or the signal may be weakened due to obstructions or the signal my be reflected off of objects. In these cases it may be necessary to install some supplementary antennae or in some cases, (if the device is primarily used indoors) a small signal booster. This is also an important reason to use as many base stations as have contact with both user and porter to ensure an accurate location.

If being used in a theme or attraction park, other kind of large family venues or any area within which the location of a porter needs to be found, a small private network of antennae could be set up. Small antennae used specifically for this purpose and not carrying regular communication traffic.

The current problems associated with the localisation of the aforementioned are overcome and the objectives of the invention are realised by the processes described in the claims.

## Claims

1. A method of localisation using the following steps : Providing an object or entity to locate with a device which emits a signal containing identification information constantly or at a designated time interval on a frequency determined by the TSP; when the said object or entity is lost a user calls the number assigned to the device which activates a program installed on the base stations which contacts the surrounding base stations, a minimum of two stations should have contact with device and user, using the information from the other stations and the known position of the base stations relative to each other the program triangulates the position of the user, then uses the position of the user as one reference point and using other base stations triangulates the position of the device, the program calculates the direction and distance of the device relative to user and it then sends this information to the user via a messaging service and the user's phone.

2. The method of claim 1, wherein the program is activated by the automatic transmission of emergency signal after an accident.

3. The method of claim 1 or 2, wherein the program installed on the base stations has the information concerning the distances and direction of other base stations nearby which are necessary to perform triangulation procedure and the program uses as many base stations as have contact with user and device to perform location procedure to increase accuracy and reliability of service, upon activation the program uses time of signal arrival at base stations to triangulate the position of the user and device, the program remains active until the user terminates call and the information is provided to the user once or is updated by the program at a time interval determined by TSP.

4. The method of any of the previous claims, wherein the information sent to the user contains at least one direction, N, S, E, W or NW etc, and distance in metres or kilometres or yards and miles.

5. The method of any of the previous claims, wherein if there are insufficient base stations or signal strength is weak the cellular network is enhanced in a defined area such as a theme or attraction park, by the introduction of small sub stations throughout the area.

6. The method of any of the previous claims wherein the porter presses a call button which automatically sends SIM information to a base station, the device identification/call number causes the program installed on the base stations to locate the user and send information back to the device the information sent to the device is its position relative to the surrounding base stations, a program resident on the device uses stored information on location and identification of the base to find the position of the device and indicate it on the map on the screen.

7. A device adapted for using the method of localisation of any of the previous claims, wherein a SIM chip is integrated in flexible circuit film, or rigid circuit board with circuitry required to operate SIM chip, transmitter, modulator, controller and antenna, the circuitry contains a built in power supply or includes a place and contacts for a battery and the SIM chip has a limited or undetermined lifetime/validity of service.

8. The device of claim 7, wherein the circuitry is embedded, enclosed or attached in the manner described respectively, to items including but not restricted to:
i. Animal collars wherein the circuitry is on flexible circuitry film sandwiched between two or more layers of leather, fabric or plastic, or the circuitry is attached on the top of the collar and under a protective covering.
ii. Broaches/pins/badges wherein the circuitry is incorporated into the bases of said items and different covers or fronts may be attached.
iii. Attached to fabric so as to be sewn into clothing etc like a label, wherein the flexible circuitry is attached to a piece of material or fabric, by means of an adhesive or fold over pins coming from the back of the circuit, which can then be sewn into the hems of clothes or onto various items such as bags, hats or other items.
iv. Watches, bracelets or other forms of jewellery wherein the circuitry is to be fashioned according to the shape of the object.
v. Hats wherein the circuitry is included in the hat peak or brim.
vi. Electronic map device wherein the circuitry is incorporated into a device that holds electronic maps and a program.
vii. Airbag system of a car wherein the transmitter is incorporated in the airbag system of a vehicle.
viii. Personal alarm wherein the circuitry is incorporated into a small handheld device, with a covered recessed button to turn on and off, the transmitter is activated by the porter and not in constant contact with bases stations.
